# EUROPEAN PATENT APPLICATION

(11) **EP 3 133 264 A1**
(43) Date of publication of application: **22.02.2017**
(21) Application number: 16182043.6
(22) Date of filing: 29.07.2016
(51) Int. Cl.: F02C 7/052

(54) **FILTRATION DEVICE WITH ELECTROSTATIC PRECIPITATOR FOR GAS TURBINE ENGINES**

(30) Priority: 18.08.2015 US 201514829411
(71) Applicant: General Electric Company, Schenectady, NY 12345 (US)
(72) Inventor: PONYAVIN, Valery Ivanovich, Greenville, SC South Carolina 29615 (US); ZHANG, Hua, Greenville, SC South Carolina 29615 (US); KIPPEL, Bradly Aaron, Greenville, SC South Carolina 29615 (US)
(74) Representative: Lee, Brenda

(57) **Abstract**

A power system (10) is provided. The power system includes a gas turbine assembly (100) having a compressor (102), a combustor (104), and a turbine (106) coupled in serial flow arrangement. The compressor has a compressor inlet (114). The power system also includes an electrostatic precipitation system (124, 200) coupled to the gas turbine assembly upstream from the compressor inlet. The compressor is oriented to receive working gases (112) discharged from the electrostatic precipitation system to facilitate removing entrained matter from the working gases flowing into the compressor inlet.

## Description

### BACKGROUND

The field of this disclosure relates generally to power systems and, more particularly, to an electrostatic precipitation system for a power system.

Some known power systems include a gas turbine assembly having a compressor, a combustor, and a turbine. Gases, such as ambient air, flow into the compressor and are compressed. The compressed gases are then discharged into the combustor wherein the compressed gases are mixed with fuel and the mixture is ignited to generate combustion gases. The combustion gases are channeled from the combustor through the turbine, thereby driving the turbine which, in turn, may power an electrical generator coupled to the turbine.

At least some known power systems include a moisture separator and a particulate filter to facilitate removing matter entrained in the gases flowing through the gas turbine assembly. However, such moisture separator and particulate filter combinations may be limited in their effectiveness, and as such, depending on the operating environment, improvements would be useful.

### BRIEF DESCRIPTION

In one aspect, a power system is provided. The power system includes a gas turbine assembly having a compressor, a combustor, and a turbine coupled in serial flow arrangement. The compressor has a compressor inlet. The power system also includes an electrostatic precipitation system coupled to the gas turbine assembly upstream from the compressor inlet. The compressor is oriented to receive working gases discharged from the electrostatic precipitation system to facilitate removing entrained matter from the working gases flowing into the compressor inlet.

In another aspect, a method of assembling a power system is provided. The method includes coupling a compressor to a combustor in flow communication within a gas turbine assembly. The compressor has a compressor inlet. The method also includes coupling an electrostatic precipitation system to the gas turbine assembly upstream from the compressor inlet such that the compressor is oriented to receive working gases discharged from the electrostatic precipitation system to facilitate removing entrained matter from the working gases flowing into the compressor inlet.

In another aspect, an electrostatic precipitator panel for removing entrained matter from gases flowing through a gas turbine assembly of a power system is provided. The panel includes a frame defining a flow path, at least one bracket coupled to the frame, and a plurality of electrically-chargeable vanes coupled to the at least one bracket such that the vanes are positioned within the flow path.

### BRIEF DESCRIPTION OF THE DRAWINGS

Figure 1 is a schematic view of an exemplary power system;
Figure 2 is a partially exploded view of an exemplary electrostatic precipitation system that may be used in the power system shown in Figure 1;
Figure 3 is a schematic sectional view of an exemplary electrostatic precipitator panel of the precipitation system shown in Figure 2;
Figure 4 is a schematic sectional view of another embodiment of the panel shown in Figure 3; and
Figure 5 is schematic sectional view of another embodiment of the panel shown in Figure 3.

### DETAILED DESCRIPTION

The following detailed description illustrates an electrostatic precipitation system for use in a power system by way of example and not by way of limitation. The description should enable one of ordinary skill in the art to make and use the electrostatic precipitation system, and the description describes several embodiments of the electrostatic precipitation system. The electrostatic precipitation system is described herein as being coupled to a gas turbine assembly of a power system. However, it is contemplated that the electrostatic precipitation system has general application to a broad range of systems in a variety of fields other than gas turbine power systems.

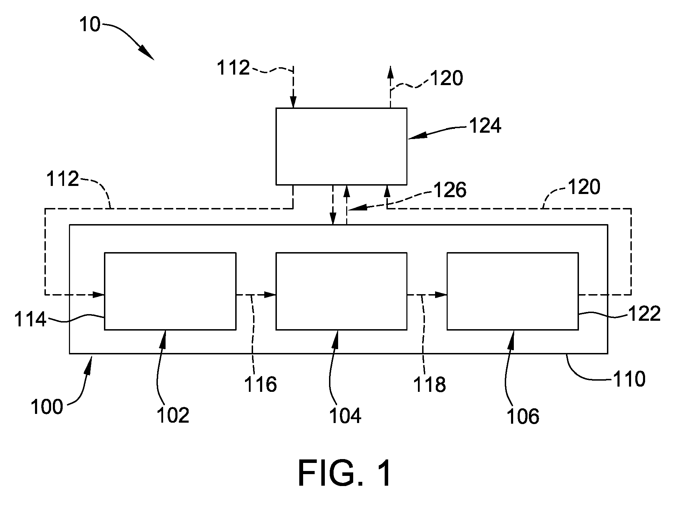

Figure 1 illustrates an exemplary power system 10. In the exemplary embodiment, power system 10 includes a gas turbine assembly 100 which has a compressor 102, a combustor 104, and a turbine 106 coupled in serial flow arrangement within a casing 110. In operation, working gases 112 (e.g., ambient air) flow into compressor 102 via a compressor inlet 114 such that working gases 112 are compressed. At least a portion of the compressed gases 116 are channeled into combustor 104 and mixed with fuel and ignited to generate combustion gases 118 that are channeled into turbine 106. Combustion gases 118 drive turbine 106, which in turn drives an electrical generator (not shown) coupled to turbine 106. Exhaust gases 120 are then discharged from turbine 106 into the ambient or into a heat recovery steam generator (HRSG) (not shown) via a turbine outlet 122.

In the exemplary embodiment, power system 10 also includes an electrostatic precipitation system 124 coupled in flow communication with gas turbine assembly 100 to facilitate removing liquid droplets and/or solid particles (collectively "entrained matter") from gases flowing through power system 10. In one embodiment, precipitation system 124 may be coupled upstream from compressor inlet 114 to facilitate removing entrained matter from working gases 112 before working gases 112 flow into compressor 102 via compressor inlet 114. In another embodiment, precipitation system 124 may be coupled downstream from turbine outlet 122 to facilitate removing entrained matter from exhaust gases 120 discharged into the ambient or into the HRSG. In other embodiments, precipitation system 124 may be coupled along a flow path 126 between compressor inlet 114 and turbine outlet 122 to facilitate removing entrained matter from gases flowing therealong (e.g., compressed gases 116, combustion gases 118, etc.). Alternatively, precipitation system 124 may be coupled to gas turbine assembly 100 in any other suitable manner that facilitates enabling precipitation system 124 to function as described herein.

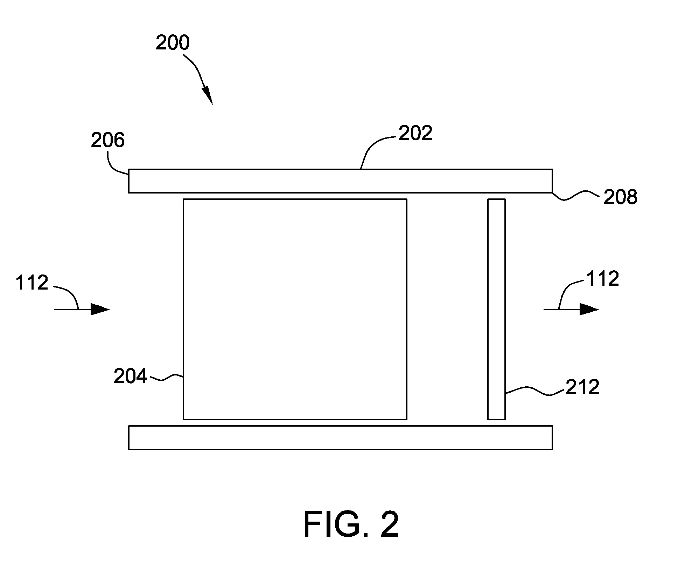

Figure 2 illustrates a partially exploded view of an exemplary precipitation system 200 that may be used in power system 10 (shown in Figure 1). In the exemplary embodiment, precipitation system 200 is upstream from compressor inlet 114 to facilitate removing entrained matter from working gases 112 flowing into compressor 102 via compressor inlet 114. Precipitation system 200 includes a housing 202 and at least one electrostatic precipitator panel 204 mounted within housing 202 between a housing inlet 206 and a housing outlet 208. During operation of power system 10, working gases 112 enter housing 202 via housing inlet 206 and flow through panel 204 prior to being discharged into compressor inlet 114 via housing outlet 208 and across a suitable network of conduits (e.g., ducts). Optionally, a fibrous-type filter 212 may be positioned downstream from panel 204 and upstream from compressor inlet 114 to facilitate the removal of solid particles from working gases 112.

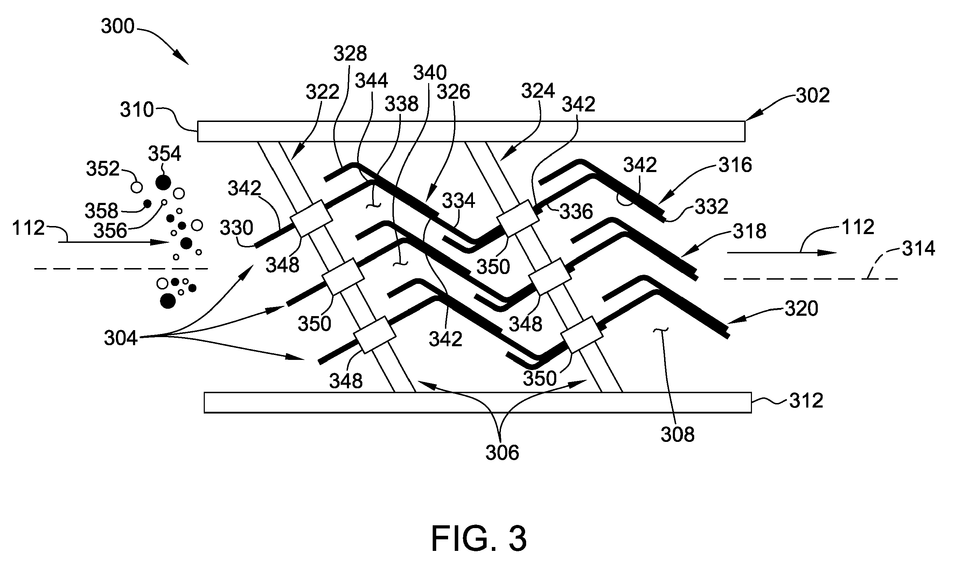

Figure 3 illustrates a schematic sectional view of an exemplary electrostatic precipitator panel 300 for use in precipitation system 200 (shown in Figure 2). In the exemplary embodiment, panel 300 includes a frame 302 and a plurality of spaced-apart vanes 304 mounted to frame 302 via at least one bracket 306, such that vanes 304 are positioned within a flow path 308 extending through frame 302 from a frame inlet 310 to a frame outlet 312 along a flow path axis 314. In the exemplary embodiment, panel 300 includes three vanes 304 that are supported by two brackets 306. More specifically, in the exemplary embodiment, vanes 304 include a first vane 316, a second vane 318, and a third vane 320 which are collectively supported in spaced-apart relation by a first bracket 322 and a second bracket 324. In other embodiments, panel 300 may include any suitable number of vanes 304 supported by any suitable number of brackets 306.

Each bracket 306 is generally rod-shaped and is fabricated, at least in part, from an electrically-conductive material (e.g., an aluminum, copper, and/or stainless steel material) which may optionally be wrapped in an electrically-insulating material (e.g., a plastic material) such that each bracket 306 can be electrically charged along at least a portion of its length using a suitable power source (e.g., a battery, a generator, etc.). In the exemplary embodiment, first bracket 322 is electrically coupled to a first power source for positively charging first bracket 322, and second bracket 324 is electrically coupled to a second power source for negatively charging second bracket 324. In other embodiments, brackets 306 may be positively or negatively charged in any suitable manner relative to one another, and brackets 306 may have any suitable shape and/or may be fabricated from any suitable material, that facilitates enabling brackets 306 to function as described herein.

Each vane 304 is fabricated from an electrically-conductive material (e.g., an aluminum, copper, and/or stainless steel material) and is coupled to at least one bracket 306 in a suitable manner. In the exemplary embodiment, each vane 304 has a generally plate-shaped body 326 from which at least one hook 328 extends. Body 326 has a cross-sectional profile that includes a leading end contour 330, a trailing end contour 332 opposite leading end contour 330, a first side contour 334, and a second side contour 336 that is opposite first side contour 334, such that side contours 334 and 336 extend from leading end contour 330 to trailing end contour 332. In this manner, a first flow path channel 338 is defined between second side contour 336 of first vane 316 and first side contour 334 of second vane 318, and a second flow path channel 340 is defined between second side contour 336 of second vane 318 and first side contour 334 of third vane 320. In other embodiments, panel 300 may include any suitable number of flow path channels defined between any suitable number of vanes 304.

In some embodiments, side contour(s) 334 and/or 336 of vane(s) 304 may include at least one deflection segment 342 that is oriented obliquely relative to flow path axis 314 such that each deflection segment 342 faces frame inlet 310 to facilitate deflecting working gases 112 flowing through frame 302 from frame inlet 310 towards frame outlet 312. For example, in the exemplary embodiment, each side contour 334 and 336 of each vane 304 undulates from its respective leading end contour 330 to its respective trailing end contour 332 to define a pair of deflection segments 342 (e.g., in the exemplary embodiment, each exemplary vane 304 includes four deflection segments 342), and one hook 328 extends from a downstream end 344 of at least one deflection segment 342. In other embodiments, however, any suitable number of hooks 328 may extend at any suitable location relative to deflection segment 342. Alternatively, vanes 304 may have any suitable shape that facilitates enabling panel 300 to function as described herein (e.g., each vane 304 may have any suitable number of deflection segments 342 and/or any suitable number of hooks 328 arranged in any suitable manner such as, for example, each vane 304 may have no hooks 328 and/or deflection segments 342 found on side contours 334 and/or 336 of body 326).

In the exemplary embodiment, first vane 316 is coupled to first bracket 322 at a first coupling 348, and first vane 316 is coupled to second bracket 324 at a second coupling 350. Second vane 318 is coupled to first bracket 322 at a second coupling 350, and second vane 318 is coupled to second bracket 324 at a first coupling 348. Third vane 320 is coupled to first bracket 322 at a first coupling 348, and third vane 320 is coupled to second bracket 324 at a second coupling 350. Notably, first couplings 348 are at least partially fabricated from an electrically-conductive material that facilitates establishing an electrical connection between their respective vanes 304 and brackets 306, whereas second couplings 350 are at least partially fabricated from an electrically-insulating material that facilitates preventing an electrical connection between their respective vanes 304 and brackets 306.

In this manner, when first bracket 322 is positively charged and second bracket 324 is negatively charged using suitable power source(s), the result is that first vane 316 becomes positively charged (and thereby functions as a collection electrode), second vane 318 becomes negatively charged (and thereby functions as a discharge electrode), and third vane 320 becomes positively charged (and thereby functions as a collection electrode), thus generating a first electrical field in first flow path channel 338 and a second electrical field in second flow path channel 340. Notably, the strength of each electrical field is determined by several factors such as, but not limited to, the applied voltage and the distance between adjacent vanes 304. It is contemplated that, in some embodiments, each panel 300 may have a spacing of about .125 - 2 inches (e.g., about .5 inches in one embodiment) between adjacent vanes 304 to enable a voltage of about 700-1000V to be applied.

In another embodiment, rather than electrically charging brackets 306 themselves, brackets 306 may instead be fabricated from an electrically-insulating material that is hollow and that permits the passage of at least one electrical wire therethrough. In such an embodiment, the electrical wiring electrically interfaces with first couplings 348 in a manner that facilitates inducing the above-described electrical charges to the respective vanes 304. In other embodiments, rather than utilizing second couplings 350 to electrically isolate certain vanes 304 from certain brackets 306, the associated bracket apertures of each respective vane 304 are formed larger where desired, such that an air gap is defined between the respective brackets 306 and the respective vanes 304 to facilitate electrically isolating each such bracket 306 from each such vane 304.

As working gases 112 flow through panel 300 during operation of power system 10, at least a portion of working gases 112 are deflected by vane deflection segments 342. As a result, some of the larger units of entrained matter (e.g., larger liquid droplets 352 and/or larger solid particles 354) within working gases 112 impact deflection segments 342 due at least in part to their inertia and, hence, their inability to rapidly change direction along with working gases 112. Notably, hooks 328 facilitate containing the entrained matter that impacts each respective deflection segment 342 (i.e., hooks 328 facilitate preventing the entrained matter that impacted deflection segments 342 from becoming re-entrained in working gases 112). In this manner, panel 300 facilitates the mechanical-type (or inertial-type) removal of larger units of entrained matter from working gases 112 before gases 112 flow into compressor inlet 114. However, some of the smaller units of entrained matter (e.g., smaller liquid droplets 356 and/or smaller solid particles 358) may have less inertia, and may be able to rapidly change direction along with working gases 112 to avoid impacting deflection segments 342 as gases 112 are deflected by deflection segments 342. As such, mechanical-type removal methods are relatively ineffective for smaller units of entrained matter.

To facilitate removing such smaller units of entrained matter, the smaller units of entrained matter entering flow path channels 338 and 340 are forced through the electric fields induced therein, and are negatively charged. The negatively charged particles are displaced away from negatively charged second vane 318 towards at least one of positively charged vanes 316 and 320 for collection thereon. In this manner, smaller units (and even some larger units) of entrained matter can be removed from working gases 112 before gases 112 flow into compressor inlet 114. Notably, liquid droplets 352 and 356 collected on first vane 316 and/or third vane 320 are gravity-fed into a suitable reservoir (not shown), effectively washing collected solid particles 354 and 358 off fouled surfaces of vanes 316 and 320 in somewhat of a self-cleaning (or self-washing) manner.

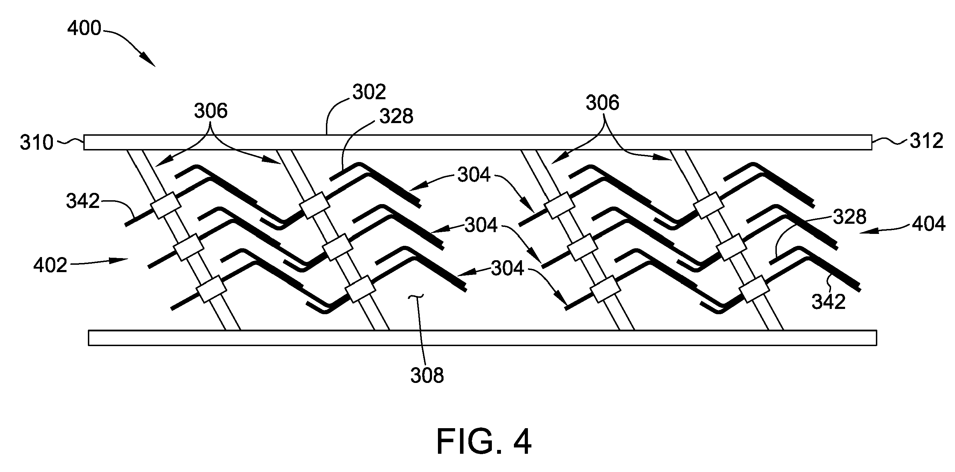

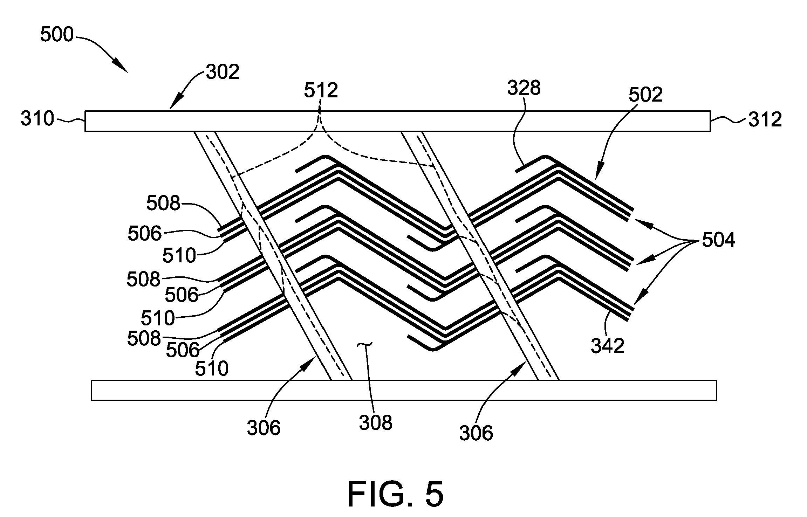

Figures 4 and 5 are schematic sectional views of other electrostatic precipitator panel embodiments for use in precipitation system 200 (shown in Figure 2). The electrostatic precipitator panels illustrated in Figures 4 and 5 are much like panel 300, with like components indicated by like reference numerals. With respect to the embodiment of Figure 4 in particular, a panel 400 is of the two-stage type and has a first set 402 of spaced-apart vanes 304 upstream of a second set 404 of spaced-apart vanes 304. In first set 402, the middle vane 304 is negatively charged and is situated between a pair of positively charged vanes 304. In second set 404 on the other hand, the middle vane 304 is positively charged and is situated between a pair of negatively charged vanes 304. With respect to the embodiment of Figure 5, a panel 500 has a set 502 of spaced-apart vanes 504 wherein each vane 504 is made up of an insulating layer 506 sandwiched between a pair of conductive layers, namely a positively charged layer 508 and a negatively charged layer 510 which are supplied their respective charges by wiring 512 disposed within brackets 306.

The methods and systems described herein facilitate removing entrained matter from gases flowing through a power system. More specifically, the methods and systems facilitate employing both mechanical-type and electrical-type removal methods to more effectively remove entrained matter (both liquid and solid) from gases flowing through a gas turbine power system. For example, the methods and systems facilitate increased water separation efficiency due to water molecules being charged. As such, the methods and systems facilitate reducing costs associated with fabricating and maintaining a gas turbine power system, and facilitate optimizing the operating efficiency of a gas turbine power system (e.g., by improving pressure gradients across the gas turbine power system). The methods and systems further facilitate enhancing the useful life of a gas turbine power system (e.g., by reducing corrosion on internal components of the gas turbine power system, and by reducing moisture that can cause blockages in fibrous-type filter(s) used in the gas turbine power system).

Exemplary embodiments of an electrostatic precipitation system and its methods of assembly are described above in detail. The methods and systems described herein are not limited to the specific embodiments described herein, but rather, components of the methods and systems may be utilized independently and separately from other components described herein. For example, the methods and systems described herein may have other applications not limited to practice with gas turbine power systems, as described herein. Rather, the methods and systems described herein can be implemented and utilized in connection with various other industries.

While the invention has been described in terms of various specific embodiments, those skilled in the art will recognize that the invention can be practiced with modification within the spirit and scope of the claims.

Various aspects and embodiments of the present invention are defined by the following numbered clauses:
1. A power system comprising:
   a gas turbine assembly comprising a compressor, a combustor, and a turbine coupled in serial flow arrangement, said compressor comprising a compressor inlet; and
   an electrostatic precipitation system coupled to said gas turbine assembly upstream from said compressor inlet, said compressor oriented to receive working gases discharged from said electrostatic precipitation system to facilitate removing entrained matter from the working gases flowing into said compressor inlet.
2. A power system in accordance with clause 1, wherein said precipitation system defines a flow path for the working gases and comprises a plurality of electrically-chargeable vanes positioned in the flow path.
3. A power system in accordance with any preceding clause, wherein at least one of said vanes comprises a deflection segment that is oriented obliquely to the flow path.
4. A power system in accordance with any preceding clause, wherein each said deflection segment comprises a downstream end, at least one of said vanes comprises a hook located at said downstream end of said deflection segment.
5. A power system in accordance with any preceding clause, wherein said precipitation system comprises at least one bracket configured to maintain a spaced relation of said plurality of vanes within the flow path.
6. A power system in accordance with any preceding clause, wherein at least one of said plurality of vanes and said at least one bracket are fabricated from an electrically-conductive material, each said vane being electrically coupled to said at least one bracket to facilitate electrically charging said each vane via said at least one bracket.
7. A power system in accordance with any preceding clause, wherein said plurality of vanes are fabricated from an electrically-conductive material and said at least one bracket comprises at least one wire, said plurality of vanes being electrically connected to said at least one wire to facilitate electrically charging said vanes via said at least one wire.
8. A method of assembling a power system, said method comprising:
   coupling a compressor to a combustor in flow communication within a gas turbine assembly, the compressor having a compressor inlet; and
   coupling an electrostatic precipitation system to the gas turbine assembly upstream from the compressor inlet such that the compressor is oriented to receive working gases discharged from the electrostatic precipitation system to facilitate removing entrained matter from the working gases flowing into the compressor inlet.
9. A method in accordance with any preceding clause, wherein coupling an electrostatic precipitation system to the gas turbine assembly comprises coupling a plurality of electrically-chargeable vanes within a working gas flow path.
10. A method in accordance with any preceding clause, wherein coupling a plurality of electrically-chargeable vanes within a working gas flow path comprises orienting a deflection segment of at least one of the vanes obliquely to the flow path.
11. A method in accordance with any preceding clause, further comprising coupling a hook to the at least one of the vanes at a downstream end of the deflection segment.
12. A method in accordance with any preceding clause, wherein coupling a plurality of electrically-chargeable vanes within a working gas flow path comprises coupling the vanes to at least one bracket to facilitate maintaining a spaced relation of the plurality of vanes within the working gas flow path.
13. A method in accordance with any preceding clause, wherein coupling the vanes to at least one bracket comprises electrically coupling each of the vanes to the at least one bracket to facilitate electrically charging each of the vanes via the at least one bracket.
14. A method in accordance with any preceding clause, wherein coupling the vanes to at least one bracket comprises electrically coupling each of the vanes to at least one wire disposed within the at least one bracket to facilitate electrically charging the vanes via the at least one wire.
15. An electrostatic precipitator panel for removing entrained matter from gases flowing through a gas turbine assembly of a power system, said panel comprising:
   a frame defining a flow path;
   at least one bracket coupled to said frame; and
   a plurality of electrically-chargeable vanes coupled to said at least one bracket such that said vanes are positioned within the flow path.
16. An electrostatic precipitator panel in accordance with any preceding clause, wherein at least one of said vanes comprises a deflection segment that is oriented obliquely to the flow path.
17. An electrostatic precipitator panel in accordance with any preceding clause, wherein said deflection segment comprises a downstream end, at least one of said vanes comprises a hook located at said downstream end of said deflection segment.
18. An electrostatic precipitator panel in accordance with any preceding clause, wherein said at least one bracket is configured to maintain a spaced relation of said vanes within the flow path.
19. An electrostatic precipitator panel in accordance with any preceding clause, wherein at least one of said vanes and said at least one bracket are fabricated from an electrically-conductive material, each said vane being electrically coupled to said at least one bracket to facilitate electrically charging said each vane via said at least one bracket.
20. An electrostatic precipitator panel in accordance with any preceding clause, wherein said vanes are fabricated from an electrically-conductive material and said at least one bracket comprises at least one wire, said vanes being electrically connected to said at least one wire to facilitate electrically charging said vanes via said at least one wire.

## Claims

1. A power system (10) comprising:
a gas turbine assembly (100) comprising a compressor (102), a combustor (104), and a turbine (106) coupled in serial flow arrangement, said compressor comprising a compressor inlet (114); and
an electrostatic precipitation system (124, 200) coupled to said gas turbine assembly upstream from said compressor inlet, said compressor oriented to receive working gases (112) discharged from said electrostatic precipitation system to facilitate removing entrained matter from the working gases flowing into said compressor inlet.

2. A power system (10) in accordance with Claim 1, wherein said precipitation system (124, 200) defines a flow path (308) for the working gases (112) and comprises a plurality of electrically-chargeable vanes (304, 316, 318, 320, 402, 404, 502, 504) positioned in the flow path.

3. A power system (10) in accordance with Claim 2, wherein at least one of said vanes (304, 316, 318, 320, 402, 404, 502, 504) comprises a deflection segment (342) that is oriented obliquely to the flow path (308).

4. A power system (10) in accordance with Claim 3, wherein each said deflection segment (342) comprises a downstream end (344), at least one of said vanes (304, 316, 318, 320, 402, 404, 502, 504) comprises a hook (328) located at said downstream end of said deflection segment.

5. A power system (10) in accordance with Claim 2, wherein said precipitation system (124, 200) comprises at least one bracket (306, 322, 324) configured to maintain a spaced relation of said plurality of vanes (304, 316, 318, 320, 402, 404, 502, 504) within the flow path (308).

6. A power system (10) in accordance with Claim 5, wherein at least one of said plurality of vanes (304, 316, 318, 320, 402, 404, 502, 504) and said at least one bracket (306, 322, 324) are fabricated from an electrically-conductive material, each said vane being electrically coupled to said at least one bracket to facilitate electrically charging said each vane via said at least one bracket.

7. A power system (10) in accordance with Claim 5, wherein said plurality of vanes (304, 316, 318, 320, 402, 404, 502, 504) are fabricated from an electrically-conductive material and said at least one bracket (306, 322, 324) comprises at least one wire (512), said plurality of vanes being electrically connected to said at least one wire to facilitate electrically charging said vanes via said at least one wire.

8. An electrostatic precipitator panel (204, 300, 400, 500) for removing entrained matter from gases (112, 116, 118, 120) flowing through a gas turbine assembly (100) of a power system (10), said panel comprising:
a frame (302) defining a flow path (308);
at least one bracket (306, 322, 324) coupled to said frame; and
a plurality of electrically-chargeable vanes (304, 316, 318, 320, 402, 404, 502, 504) coupled to said at least one bracket such that said vanes are positioned within the flow path.

9. An electrostatic precipitator panel (204, 300, 400, 500) in accordance with Claim 8, wherein at least one of said vanes (304, 316, 318, 320, 402, 404, 502, 504) comprises a deflection segment (342) that is oriented obliquely to the flow path (308).

10. An electrostatic precipitator panel (204, 300, 400, 500) in accordance with Claim 9, wherein said deflection segment (342) comprises a downstream end (344), at least one of said vanes (304, 316, 318, 320, 402, 404, 502, 504) comprises a hook (328) located at said downstream end of said deflection segment.

11. A method of assembling a power system, said method comprising:
coupling a compressor to a combustor (104) in flow communication within a gas turbine assembly (100), the compressor (102) having a compressor inlet (114); and
coupling an electrostatic precipitation system to the gas turbine assembly upstream from the compressor inlet such that the compressor (102) is oriented to receive working gases (112) discharged from the electrostatic precipitation system to facilitate removing entrained matter from the working gases flowing into the compressor inlet.
